# EUROPEAN PATENT APPLICATION

(11) **EP 4 418 412 A1**
(43) Date of publication of application: **21.08.2024**
(21) Application number: 21963608.1
(22) Date of filing: 11.11.2021
(51) Int. Cl.: H01M 50/10

(54) **BATTERY CELL AND MANUFACTURING METHOD AND MANUFACTURING SYSTEM THEREFOR, AND BATTERY AND ELECTRIC APPARATUS**

(71) Applicant: Contemporary Amperex Technology Co., Limited, Ningde City, Fujian 352100 (CN)
(72) Inventor: XU, Hu, Ningde City, Fujian 352100 (CN)
(74) Representative: Gong, Jinping
(86) International application number: PCT/CN2021/130161
(87) International publication number: WO 2023/082155

(57) **Abstract**

The embodiments of the present application discloses a battery cell, a method and a system for manufacturing the battery cell, a battery, and an electrical apparatus. The battery cell includes a housing, an electrode component, and an electrode terminal. The outer surface of the housing is provided with a recess. The electrode component is accommodated within the housing. At least a part of the electrode terminal is accommodated within the recess, and the electrode terminal is configured to be electrically connected to the electrode component to export electric energy of the electrode component. The recess is configured to accommodate at least a part of a busbar of a battery, the busbar is configured to connect electrode terminals of a plurality of battery cells to electrically connect the plurality of battery cells. The embodiments of the present application can save the space occupied by the busbar in the battery, increase the utilization rate of the space in the battery, and improve the energy density of the battery.

## Description

### TECHNICAL FIELD

The present application relates to a technical field of batteries, and in particular, to a battery cell, a method and a system for manufacturing a battery cell, a battery and an electrical apparatus.

### BACKGROUND

Battery cells are widely used in electrical devices, such as a mobile phone, a notebook computer, an electric bike, an electric vehicle, an electric plane, an electric ship, an electric toy vehicle, an electric toy ship, an electric toy plane, and an electric tool, and the like. The battery cell may include a nickel-cadmium battery cell, a nickel-hydrogen battery cell, a lithium ion battery cell, a secondary alkaline zinc-manganese battery cell, and the like.

In the development of battery technology, how to increase energy density is a research direction in the battery technology.

### SUMMARY

The present application provides a battery cell, a method and a system for manufacturing the battery cell, a battery, and an electrical apparatus, which can increase energy density.

In an aspect, an embodiment of the present application provides a battery cell, including: a housing, wherein an outer surface of the housing is provided with a recess; an electrode component accommodated within the housing; and an electrode terminal at least partially accommodated within the recess, wherein the electrode terminal is configured to be electrically connected to the electrode component to export electric energy of the electrode component; wherein the recess is configured to accommodate at least a part of a busbar of a battery, the busbar is configured to connect electrode terminals of a plurality of battery cells to electrically connect the plurality of battery cells.

In the above solution, by disposing the recess on the housing, the size of a part of the electrode terminal protruding from the outer surface of the housing is reduced, thereby reducing the overall size of the battery cell and the space occupied by the battery cell in the battery. The recess can also accommodate at least a part of the busbar, which can save the space occupied by the busbar in the battery, increase the utilization rate of the space in the battery, and improve the energy density of the battery.

In some embodiments, a part of the electrode terminal positioned outside the housing is completely accommodated within the recess.

In the above solution, the electrode terminal does not protrude from the outer surface of the housing and does not increase the size of the battery cell, thereby increasing the energy density of the battery cell. Under a condition that a plurality of battery cells are arranged in sequence, the electrode terminal does not interfere with the housing of the adjacent battery cell, thereby reducing the spacing between the housings of adjacent battery cells and improving the energy density.

In some embodiments, the housing includes two first surfaces oppositely arranged along a first direction, two second surfaces oppositely arranged along a second direction, and two third surfaces oppositely arranged along a third direction.

In some embodiments, an area of the first surface is greater than an area of the second surface, and the area of the first surface is greater than an area of the third surface.

In some embodiments, the first direction, the second direction and the third direction are perpendicular to each other.

In some embodiments, the recess is recessed relative to the first surface. The electrode terminal includes a first electrode terminal and a second electrode terminal having opposite polarities, wherein at least a part of the first electrode terminal and at least a part of the second electrode terminal are accommodated within the recess.

In the above solution, the recess may be configured to accommodate both the first electrode terminal and the second electrode terminal, which simplifies the molding process of the housing.

In some embodiments, the first electrode terminal and the second electrode terminal are correspondingly arranged along the second direction.

In the above solution, the first electrode terminal and the second electrode terminal are correspondingly arranged along the second direction, so that the first electrode terminal and the second electrode terminal can share the same space in the third direction, which effectively improves the space utilization rate, and increases the energy density of the battery cell.

In some embodiments, two ends of the recess along the second direction extend to the two second surfaces respectively. The busbar may extend into the recess from a side of the recess close to the second surface, so as to connect to the first electrode terminal or the second electrode terminal.

In some embodiments, one end of the recess along the third direction extends to one of the third surfaces. The busbar may extend into the recess from a side of the recess close to the third surface, so as to connect to the first electrode terminal or the second electrode terminal.

In some embodiments, the recess includes a first recess and a second recess that are spaced apart, at least a part of the first electrode terminal is accommodated within the first recess, and at least a part of the second electrode terminal is accommodated within the second recess.

In some embodiments, the first recess and the second recess are correspondingly arranged along the second direction.

In the above solution, the first recess and the second recess share the same space in the third direction, so that more space can be reserved for the electrode component in the third direction, thereby effectively increasing the capacity of the electrode component.

In some embodiments, one end of the first recess away from the second recess extends to one of the second surfaces, and one end of the second recess away from the first recess extends to the other of the second surfaces. One busbar may extend into the first recess from a side of the first recess close to one of the second surfaces, so as to connect to the first electrode terminal. Another busbar may extend into the second recess from a side of the second recess close to the other of the second surfaces, so as to connect to the second electrode terminal.

In some embodiments, one end of the first recess along the third direction and one end of the second recess along the third direction extend to a same third surface of the third surfaces. Two busbars may extend into the first recess and the second recess from a side of the first recess close to the third surface and a side of the second recess close to the third surface respectively, so as to connect to the first electrode terminal and the second electrode terminal respectively.

In some embodiments, a projection of the first recess along the first direction and a projection of the first recess along the first direction are arranged along a diagonal direction of a projection of the housing along the first direction.

In some embodiments, one end of the first recess along the second direction extends to one of the second surfaces, and one end of the second recess along the second direction extends to the other of second surfaces. One busbar may extend into the first recess from a side of the first recess close to one of the second surfaces, so as to connect to the first electrode terminal. Another busbar may extend into the second recess from a side of the second recess close to the other of the second surfaces, so as to connect to the second electrode terminal.

In some embodiments, one end of the first recess along the third direction extends to one of the third surfaces, and one end of the second recess along the third direction extends to the other of the third surfaces. One busbar may extend into the first recess from a side of the first recess close to one of the third surfaces, so as to connect to the first electrode terminal. Another busbar may extend into the second recess from a side of the second recess close to the other of the third surfaces, so as to connect to the second electrode terminal.

In some embodiments, the recess includes a first recess and a second recess, the first recess is recessed relative to one of the second surfaces, and the second recess is recessed relative to the other of the second surfaces. The electrode terminal includes a first electrode terminal and a second electrode terminal having opposite polarities, at least a part of the first electrode terminal is accommodated within the first recess, and at least a part of the second electrode terminal is accommodated within the second recess.

In some embodiments, two ends of the first recess along the first direction extend to the two first surfaces respectively, and two ends of the second recess along the first direction extend to the two first surfaces respectively. One busbar may extend into the first recess from a side of the first recess close to one of the first surfaces, so as to connect to the first electrode terminal. Another busbar may extend into the second recess from a side of the second recess close to the other of the first surfaces, so as to connect to the second electrode terminal.

In some embodiments, the first recess and the second recess are correspondingly arranged along the second direction.

In the above solution, the first recess and the second recess share the same space in the third direction, so that more space can be reserved for the electrode component in the third direction, thereby effectively increasing the capacity of the electrode component.

In some embodiments, one end of the first recess along the third direction and one end of the second recess along the third direction extend to a same third surface of the third surfaces. Two busbars may extend into the first recess and the second recess from a side of the first recess close to the third surface and a side of the second recess close to the third surface respectively, so as to connect to the first electrode terminal and the second electrode terminal respectively.

In some embodiments, the electrode component includes a body portion, a first electrode tab and a second electrode tab, and the first electrode tab and the second electrode tab are led out from the body portion and have opposite polarities. In the second direction, at least a part of the first electrode tab is located between the first electrode terminal and the second electrode terminal and is electrically connected to the first electrode terminal, and at least a part of the second electrode tab is located between the first electrode terminal and the second electrode terminal and is electrically connected to the second electrode terminal.

In the above solution, the first electrode tab and the second electrode tab are arranged using the space between the first electrode terminal and the second electrode terminal, so that more space can be reserved for the body portion, and the capacity of the electrode component is increased.

In some embodiments, the first recess and the second recess are diagonally arranged on the housing.

In some embodiments, one end of the first recess along the third direction extends to one of the third surfaces, and one end of the second recess along the third direction extends to the other of the third surfaces. One busbar may extend into the first recess from a side of the first recess close to one of the third surfaces, so as to connect to the first electrode terminal. Another busbar may extend into the second recess from a side of the second recess close to the other of the third surfaces, so as to connect to the second electrode terminal.

In a second aspect, an embodiment of the present application provides a battery, including: a plurality of battery cells according to any of the embodiments of the first aspect, a busbar configured to connect electrode terminals of the plurality of battery cells to electrically connect the plurality of battery cells. The recess of the battery cell is configured to accommodate at least a part of the busbar.

In some embodiments, the busbar is integrally accommodated in a space formed by the recesses of the plurality of the battery cells, thereby improving the space utilization rate and improving the energy density of the battery.

In a third aspect, an embodiment of the present application provide an electrical apparatus including the battery cell according to any of the embodiments of the first aspect, wherein the battery cell is configured to provide electric energy.

In a fourth aspect, an embodiment of the present application provides a method for manufacturing a battery cell, including:
providing a housing and an electrode terminal, wherein an outer surface of the housing is provided with a recess, and the electrode terminal is at least partially accommodated within the recess;
providing an electrode component;
installing the electrode component into the housing, and electrically connecting the electrode terminal to the electrode component to export electric energy of the electrode component;
wherein the recess is configured to accommodate at least a part of a busbar of a battery, the busbar is configured to connect electrode terminals of a plurality of battery cells to electrically connect the plurality of battery cells.

In a fifth aspect, an embodiment of the present application provides a system for manufacturing a battery cell, including:
a first providing apparatus configured to provide a housing and an electrode terminal, wherein an outer surface of the housing is provided with a recess, and the electrode terminal is at least partially accommodated within the recess;
a second providing apparatus configured to provide an electrode component;
an assembling apparatus configured to install the electrode component into the housing, and electrically connect the electrode terminal to the electrode component to export electric energy of the electrode component;
wherein the recess is configured to accommodate at least a part of a busbar of a battery, the busbar is configured to connect electrode terminals of a plurality of battery cells to electrically connect the plurality of battery cells.

### BRIEF DESCRIPTION OF THE DRAWINGS

In order to illustrate technical solutions of embodiments of the present application more clearly, the drawings required for the embodiments of the present application will be briefly described. Obviously, the drawings described below are merely some embodiments of the present application. For a person skilled in the art, other drawings can also be obtained from these drawings without any inventive efforts.
Fig. 1 is a schematic structural view of a vehicle according to some embodiments of the present application.
Fig. 2 is an schematic exploded view of a battery according to some embodiments of the present application
Fig. 3 is a schematic stereoscopic view of a battery cell according to some embodiments of the present application.
Fig. 4 is a schematic cross-sectional view of the battery cell shown in Fig. 3.
Fig. 5 is a schematic cross-sectional view of the battery cell shown in Fig. 3 and a busbar connected to the battery cell.
Fig. 6 is a schematic stereoscopic view of a battery cell according to some other embodiments of the present application.
Fig. 7 is a schematic stereoscopic view of a battery cell according to some other embodiments of the present application.
Fig. 8 is a schematic stereoscopic view of a battery cell according to some other embodiments of the present application.
Fig. 9 is a schematic stereoscopic view of a battery cell according to some other embodiments of the present application.
Fig. 10 is a schematic stereoscopic view of a battery cell according to some other embodiments of the present application.
Fig. 11 is a schematic cross-sectional view of the battery cell shown in Fig. 10 and a busbar connected to the battery cell.
Fig. 12 is a schematic stereoscopic view of a battery cell according to some other embodiments of the present application.
Fig. 13 is a schematic cross-sectional view of the battery cell shown in Fig. 12.
Fig. 14 is a schematic stereoscopic view of a battery cell according to some other embodiments of the present application.
Fig. 15 is a schematic flowchart of a method for manufacturing a battery cell according to some embodiments of the present application.
Fig. 16 is a schematic flowchart of a method for manufacturing a battery cell according to some embodiments of the present application.

In the drawings, the drawings are not drawn according to actual scale.

### DETAILED DESCRIPTION

In order to make the purposes, technical solutions and advantages of embodiments of the present application more clear, the technical solutions of the embodiments of the present application will be described clearly in conjunction with the drawings in the embodiments of the present application. Obviously, the described embodiments are a part of the embodiments of the present application, but not all of the embodiments. Based on the embodiments in the present application, all other embodiments obtained by those ordinary skilled in the art without any creative work shall fall within the protection scope of the present application.

Unless otherwise defined, all technical and scientific terms used in the present application have the same meanings as commonly understood by those skilled in the technical field of the present application. In the present application, the terms used in the description of the present application are only for purposes of description of specific embodiments, and are not intended to limit the present application. The terms "comprising" and "having" in the description and claims of the present application and the above brief description of the drawings and any variations thereof are intended to cover non-exclusive inclusions. The terms "first", "second" and the like in the description and claims or the above brief description of the drawings of the present application are used to distinguish different objects, rather than to describe a specific order or primary and secondary relationship.

Reference to "an embodiment" in the present application means that a particular feature, structure or characteristic described in connection with the embodiment may be included in at least one embodiment of the present application. Appearances of the phrase in various places in the description are not necessarily all referring to the same embodiment, nor a separate or alternative embodiment that is mutually exclusive of other embodiments.

In the description of the present application, it should be noted that, unless otherwise expressly specified and limited, the terms "installed", "connected", "connection" and "attached" should be understood in a broad sense, for example, they may refer to a fixed connection, a detachable connection or an integral connection, which may be a direct connection, an indirect connection via an intermediate medium, or an internal communication between two elements. For those of ordinary skill in the art, the specific meanings of the above-mentioned terms in the present application can be understood in accordance with specific conditions.

Term "and/or" in the present application is only a kind of association relationship that describes associated objects, which indicates three possible kinds of relationships. For example, A and/or B may indicate the following three cases: A exists alone, A and B exist simultaneously, and B exists alone. In addition, the character "/" in the present application generally indicates that the associated objects have an "or" relationship.

In the embodiments of the present application, the term "parallel" includes not only the case of being absolutely parallel, but also the case of being approximately parallel in the conventional knowledge of engineering. Similarly, the term "perpendicular" includes not only the case of being absolutely perpendicular, but also the case of being approximately perpendicular in the conventional knowledge of engineering.

In the embodiments of the present application, the same reference numerals denote the same components, and for brevity, in different embodiments, detailed descriptions of the same components are omitted. It should be understood that sizes, such as a thickness, a length and a width, and the like, of various components in the embodiments of the present application shown in the drawings, as well as an overall thickness, a length and a width, and the like of an integrated device are only exemplary descriptions, and should not constitute any limitation to the present application.

The "plurality" that appears in the present application refers to two or more (including two).

In the present application, a battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited in the embodiments of the present application.

A battery mentioned in the embodiments of the present application refers to a single physical module including one or more battery cells to provide a higher voltage and a higher capacity. For example, the battery mentioned in the present application may be a battery module, a battery pack, or the like. A battery typically includes a box body for enclosing one or more battery cells. The box body can prevent liquids or other foreign objects from affecting the charging or discharging of the battery cells.

A battery cell includes an electrode component and electrolyte, and the electrode component includes a positive electrode plate, a negative electrode plate and a separator. The operation of the battery cell mainly relies on a movement of metal ions between the positive electrode plate and the negative electrode plate. The positive electrode plate includes a positive electrode current collector and a positive electrode active material layer, and the positive electrode active material layer is coated on a surface of the positive electrode current collector; the positive electrode current collector includes a positive electrode current collecting portion coated with the positive electrode active material layer and a positive electrode tab not coated with the positive electrode active material layer. Taking a lithium ion battery cell as an example, a material of the positive electrode current collector may be aluminum, the positive electrode active material layer includes a positive electrode active material. The positive electrode active material may be lithium cobalt oxide, lithium iron phosphate, ternary lithium or lithium manganate, and the like. The negative electrode plate includes a negative electrode current collector and a negative electrode active material layer, and the negative electrode active material layer is coated on a surface of the negative electrode current collector; the negative electrode current collector includes a negative electrode current collecting portion coated with the negative electrode active material layer and a negative electrode tab not coated with the negative electrode active material layer. A material of the negative electrode current collector may be copper, the negative electrode active material layer includes a negative electrode active material, and the negative electrode active material may be carbon or silicon, and the like. A material of the separator may be PP (polypropylene), PE (polyethylene), or the like.

The battery cell further includes a housing and electrode terminals, the electrode component is accommodated within the housing, and the electrode terminals are installed within the housing and configured to be electrically connected to the electrode component, so that the electric energy of the electrode component may be exported.

With the development of battery technology, users' demand on capacity of the battery are increasing. For example, with increasing popularity of new energy vehicles, a demand for use of batteries in the new energy vehicles is becoming higher and higher. Users' demand for mileage of the new energy vehicles are constantly increasing, so that capacity of a battery used by the new energy vehicle needs to be increased continuously.

The battery includes the box body and a plurality of battery cells accommodated in the box body, the plurality of battery cells may be connected in series or in parallel or in a parallel-series connection, and a parallel-series connection means that the connections between the plurality of battery cells include a series connection and a parallel connection.

In the related art, the plurality of battery cells are electrically connected through a busbar, and the electrode terminals generally protrude from the housing to facilitate connection with an external busbar. However, the inventors have found that, the electrode terminals protruding from the housing increase a size of the battery cell and space in the box body occupied by the battery cell, and the busbar also occupies space in the battery, which reduces a utilization rate of the space in the battery, thereby lowering the energy density of the battery.

In view of this, the embodiments of the present application provide a technical solution in which the battery cell includes a housing, an electrode component, and an electrode terminal. The outer surface of the housing is provided with a recess. The electrode component is accommodated within the housing. At least a part of the electrode terminal is accommodated within the recess, and the electrode terminal is configured to be electrically connected to the electrode component to export electric energy of the electrode component. The recess is configured to accommodate at least a part of a busbar of a battery, the busbar is configured to connect electrode terminals of a plurality of battery cells to electrically connect the plurality of battery cells. According to the technical solution, by disposing the recess on the housing, the size of a part of the electrode terminal protruding from the outer surface of the housing is reduced, thereby reducing the overall size of the battery cell and the space occupied by the battery cell in the battery. The recess can also accommodate at least a part of the busbar, which can save the space occupied by the busbar in the battery, increase the utilization rate of the space in the battery, and improve the energy density of the battery.

The technical solutions described in the embodiments of the present application are applicable to a battery and an electrical apparatus using a battery.

The electrical apparatus may be a vehicle, a mobile phone, a portable device, a notebook computer, a ship, a spacecraft, an electric toy, an electric tool, and the like. The vehicle may be a fuel vehicle, a gas vehicle or a new energy vehicle, and the new energy vehicle may be a pure electric vehicle, a hybrid vehicle or an extended-range vehicle, and the like; the spacecraft includes an airplane, a rocket, a space shuttle, a spacecraft, and the like; the electric toy includes a fixed or movable electric toy, such as a game console, an electric vehicle toy, an electric ship toy and an electric plane toy, and the like; the electric tool includes a metal-cutting electric tool, a grinding electric tool, an assembling electric tool and a railway electric tool, such as, an electric drill, an electric grinder, an electric wrench, an electric screwdriver, an electric hammer, an electric impact drill, a concrete vibrator and an electric planer, and the like. There is no special limitation on the above electrical apparatus in the embodiments of the present application.

In the following embodiments, for the convenience of description, the electrical apparatus is taken as a vehicle for illustration.

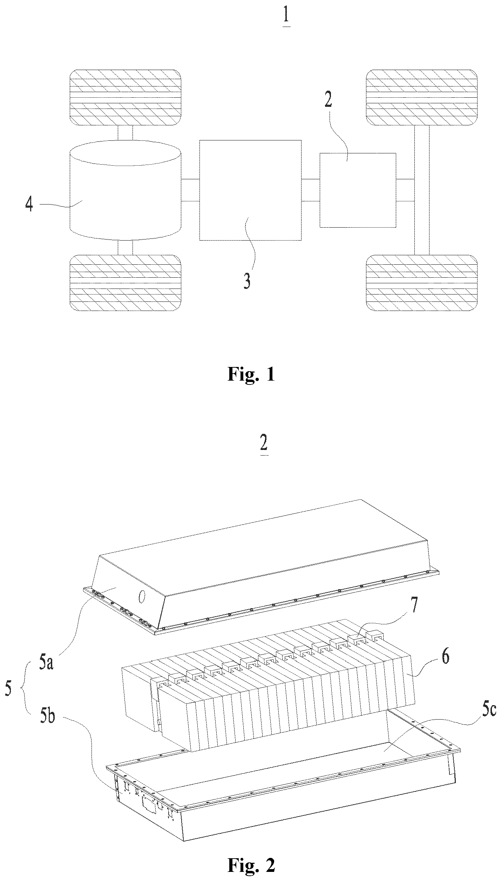

Fig. 1 is a schematic structural view of a vehicle according to some embodiments of the present application.

As shown in Fig. 1, a battery 2 is arranged inside a vehicle 1. The battery 2 may be arranged at the bottom or the head or the rear of the vehicle 1. The battery 2 may be used for supplying power to the vehicle 1, for example, the battery 2 may be used as a manipulating power source of the vehicle 1.

The vehicle 1 may further include a controller 3 and a motor 4. The controller 3 is configured to control the battery 2 to supply power to the motor 4, for example, for satisfying work power demands in the starting, navigating, and driving of the vehicle 1.

In some embodiments of the present application, the battery 2 may not only be used as the manipulating power source of the vehicle 1, but may also be used as a driving power source of the vehicle 1 to provide driving power for the vehicle 1 instead of or partially instead of fuel or natural gas.

Fig. 2 is an exploded schematic view of a battery according to some embodiments of the present application.

As shown in Fig. 2, the battery 2 includes a box body 5 and a battery cell 6 accommodated within the box body 5.

The box body 5 is used for accommodating the battery cell 6, and the box body 5 may be of various structures. In some embodiments, the box body 5 may include a first box body portion 5a and a second box body portion 5b. The first box body portion 5a and the second box body portion 5b may be covered by each other. The first box body portion 5a and the second box body portion 5b together define an accommodating space 5c for accommodating the battery cell 6. The second box body portion 5b may be a hollow structure with one open side. The first box body portion 5a is a plate-shaped structure. The first box body portion 5a covers the open side of the second box body portion 5b, so that the box body 5 having the accommodating space 5c is formed. Each of the first box body portion 5a and the second box body portion 5b may be a hollow structure with one open side, and the opening side of the first box body portion 5a covers the opening side of the second box body portion 5b, so that the box body 5 having the accommodating space 5c is formed. Of course, the first box body portion 5a and the second box body portion 5b may be in various shapes, such as a cylinder, a cuboid, and the like.

In order to improve an sealing performance after the first box body portion 5a and the second box body portion 5b are connected, a sealing member, such as sealant, a sealing ring, and the like, may be provided between the first box body portion 5a and the second box body portion 5b.

Assuming that the first box body portion 5a covers the top of the second box body portion 5b, the first box body portion 5a may be referred to as an upper box cover plate, and the second box body portion 5b may be referred to as a lower box body.

In the battery 2, there may be one such battery cell 6 or a plurality of such battery cells 6. Under a condition that there are a plurality of such battery cells 6, the plurality of battery cells 6 may be connected in series or in parallel or in a parallel-series connection, and a parallel-series connection means that the connections between the plurality of battery cells 6 include a series connection and a parallel connection.

The plurality of battery cells 6 may be directly connected in series or in parallel or in a parallel-series connection, and then an integrated body composed of the plurality of battery cells 6 is accommodated within the box body 5; of course, the plurality of battery cells 6 may be connected in series or in parallel or in a parallel-series connection to form a battery module, and a plurality of battery modules are connected in series or in parallel or in a parallel-series connection to form an integrated body and are accommodated within the box body 5.

In some embodiments, the integrated body of the battery cells 6 is directly installed on the box body 5. Accordingly, a process for forming the plurality of battery cells 6 into the battery module may omitted, and a fixing frame for fixing the battery cells 6 in the battery module may be eliminated, so that a structure of the battery can be simplified, thereby improving the energy density of the battery.

In some embodiments, the battery 2 further includes a busbar 7 configured to connect a plurality of battery cells 6 to achieve a series connection or a parallel connection or a hybrid connection between the plurality of battery cells 6.

In some embodiments, there may be a plurality of busbar 7. Exemplarily, each of the busbars 7 connects two adjacent battery cells 6.

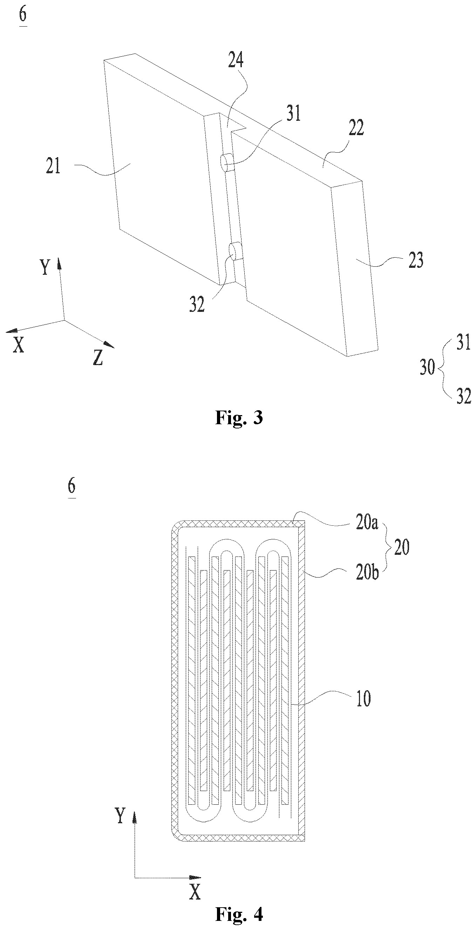

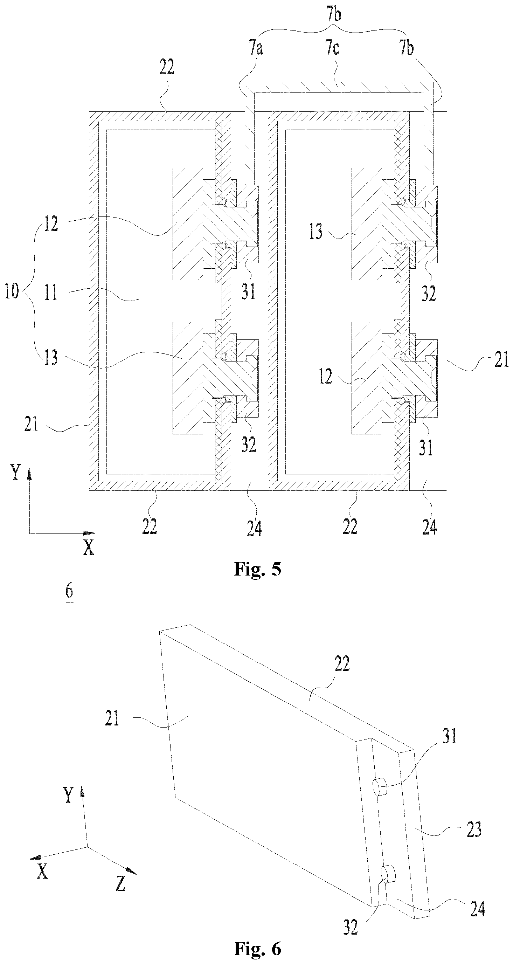

Fig. 3 is a schematic stereoscopic view of a battery cell according to some embodiments of the present application. Fig. 4 is a schematic cross-sectional view of the battery cell shown in Fig. 3. Fig. 5 is a schematic cross-sectional view of the battery cell shown in Fig. 3 and a busbar connected to the battery cell.

As shown in Fig. 3 to Fig. 5, the battery cell 6 according to the embodiments of the present application includes an electrode component 10, a housing 20, and an electrode terminal 30. The outer surface of the housing 20 is provided with a recess 24. The electrode component 10 is accommodated within the housing 20. At least a part of the electrode terminal 30 is accommodated within the recess 24, and the electrode terminal 30 is configured to be electrically connected to the electrode component 10 to export electric energy of the electrode component 10. The recess 24 is configured to accommodate at least a part of a busbar 7 of a battery, the busbar 7 is configured to connect electrode terminals 30 of a plurality of battery cells 6 to electrically connect the plurality of battery cell 6.

The electrode component 10 is a core component for the battery cell 6 to achieve a charging and discharging function, and includes a first electrode plate, a second electrode plate and a separator, the first electrode plate and the second electrode plate have opposite polarities, and the separator is used for insulating and separating the first electrode plate and the second electrode plate. The operation of the electrode component 10 mainly relies on a movement of metal ions between the first electrode plate and the second electrode plate.

One of the first electrode plate and the second electrode plate is a positive electrode plate, and the other of the first electrode plate and the second electrode plate is a negative electrode plate.

There may be one electrode component 10 or a plurality of electrode components 10, which is not limited by the embodiment.

The housing 20 is a hollow structure, and an accommodating cavity for accommodating the electrode component 10 and the electrolyte is formed inside the housing 20. The housing 20 may be in various shapes, for example, a cylinder shape, a cuboid shape, and the like. The shape of the housing 20 may be determined according to the specific shape of the electrode component 10. For example, under a condition that the electrode component 10 is a cylinder structure, the housing 20 may be selected to be a cylindrical housing; under a condition that the electrode component 10 is a cuboid structure, the housing 20 may be selected to be a cuboid housing.

The recess 24 is recessed relative to the outer surface of the housing 20. The electrode terminal 30 may be mounted on the bottom wall of the recess 24 or on the side wall of the recess 24.

The electrode terminal 30 may be completely accommodated within the recess 24, or may be only partially accommodated within the recess 24. For example, a part of the electrode terminal 30 may pass through the housing 20 and extend into the housing 20 to achieve an electrical connection between the electrode terminal 30 and the electrode component 10.

The electrode terminal 30 may protrude from the outer surface of the housing 20, or may not protrude from the outer surface of the housing 20.

In the battery, the busbar 7 may be connected to the electrode terminal 30 of the battery cell 6 by welding, bonding, clamping, or other means.

Exemplary, a part of the busbar 7 accommodated in the recess 24 is connected to the electrode terminal 30.

In this embodiment, the arrangement direction of the busbar 7 and the electrode terminal 30 is not limited. For example, the busbar 7 may be connected to the top end surface of the electrode terminal 30 or to the side surface of the electrode terminal 30.

In this embodiment, by disposing the recess 24 on the housing 20, the size of a part of the electrode terminal 30 protruding from the outer surface of the housing 20 is reduced, thereby reducing the overall size of the battery cell 6 and the space occupied by the battery cell 6 in the battery. The recess 24 can also accommodate at least a part of the busbar 7, which can save the space occupied by the busbar 7 in the battery, increase the utilization rate of the space in the battery, and improve the energy density of the battery.

In this embodiment, the recess 24 may also be configured to accommodate other battery components, such as sampling components, cooling components, and the like.

In some embodiments, the housing 20 includes a housing body 20a and an end cover 20b, the end of the housing body 20a has an opening, and the end cover 20b covers the opening of the housing body 20a. The electrode terminal 30 may be mounted on the housing body 20a or on the end cover 20b.

In some embodiments, the electrode component 10 includes a body portion 11 and a first electrode tab 12 and a second electrode tab 13 led out from the body portion 11. The body portion 11 is an electrical generating portion of the electrode component 10, and the internal active substance is used for electrochemical reaction with the electrolyte to produce a charge-discharge process. The first electrode tab 12 and the second electrode tab 13 are configured to export the electric energy generated by the body portion 11. Exemplary, the first electrode tab 12 is an area of the first electrode plate that are not coated with the active substance layer, and the second electrode tab 13 is an area of the second electrode plate that are not coated with the active substance layer.

In some embodiments, a part of the electrode terminal 30 positioned outside the housing 20 is completely accommodated within the recess 24.

In this embodiment, the electrode terminal 30 does not protrude from the outer surface of the housing 20 and does not additionally increase the size of the battery cell 6, thereby increasing the energy density of the battery cell 6. Under a condition that the plurality of battery cells 6 are arranged in sequence, the electrode terminal 30 does not interfere with the housing 20 of the adjacent battery cell 6, thereby reducing the spacing between the housings 20 of the adjacent battery cells 6 and improving the energy density.

In some embodiments, the housing 20 includes two first surfaces 21 oppositely arranged along a first direction X, two second surfaces 22 oppositely arranged along a second direction Y, and two third surfaces 23 oppositely arranged along a third direction Z.

Exemplary, the first surface 21 is a plane perpendicular to the first direction X, the second surface 22 is a plane perpendicular to the second direction Y, and the third surface 23 is a plane perpendicular to the third direction Z.

The first direction X, the second direction Y and the third direction Z are intersect with each other.

Exemplary, the housing 20 is in a prismatic shape.

Two ends of the first surface 21 along the second direction Y are connected to the two second surfaces 22 respectively. The first surface 21 and the second surface 22 may be directly connected, or may be indirectly connected through other surfaces (e.g., arc surfaces).

Two ends of the first surface 21 along the third direction Z are connected to the two third surfaces 23 respectively. The first surface 21 and the third surface 23 may be directly connected, or may be indirectly connected through other surfaces (e.g., arc surfaces).

In some embodiments, the area of the first surface 21 is greater than the area of the second surface 22, and the area of the first surface 21 is greater than the area of the third surface 23.

In this embodiment, the first surface 21 is the surface having the largest area among all surfaces of the housing 20.

In some embodiments, the first direction X, the second direction Y, and the third direction Z are perpendicular to each other.

In this embodiment, the housing 20 is generally in a cuboid shape.

In some embodiments, the recess 24 is recessed relative to the first surface 21. The electrode terminal 30 includes a first electrode terminal 31 and a second electrode terminal 32 having opposite polarities, and at least a part of the first electrode terminal 31 and at least a part of the second electrode terminal 32 are accommodated within the recess 24.

The recess 24 forms an opening on the first surface 21. Exemplary, the bottom surface of the recess 24 is parallel to the first surface 21.

The first electrode terminal 31 is electrically connected to the first electrode tab 12, and the second electrode terminal 32 is electrically connected to the second electrode tab 13, thereby exporting the electric energy of the electrode component 10.

In some embodiments, the first electrode tab 12 is directly connected to the first electrode terminal 31, and the second electrode tab 13 is directly connected to the second electrode terminal 32.

Exemplary, the electrode component 10 is in a stacked structure, and a plurality of first electrode tabs and a plurality of second electrode tabs are alternately stacked along the first direction X.

Exemplary, the electrode component 10 is in a stacked structure. The first electrode tabs are continuously bend, and include a plurality of stacked segments and a plurality of bent segments. The plurality of stacked segments and the second electrode tabs are alternately stacked along the first direction X, and each of the bent segments is configured to connect two adjacent ones of the stacked segments.

Exemplary, the electrode component 10 is in a winding structure, and the first electrode tabs and the second electrode tabs are coiled around a winding axis and form the winding structure. The winding axis is perpendicular to the first direction X.

Exemplary, a part of the first electrode terminal 31 positioned outside the housing 20 is completely accommodated within the recess 24, and a part of the second electrode terminal 32 positioned outside the housing 20 is completely accommodated within the recess 24.

In this embodiment, the recess 24 may be configured to accommodate both the first electrode terminal 31 and the second electrode terminal 32, so that the molding process of the housing 20 can be simplified.

In some embodiments, the first electrode terminal 31 and the second electrode terminal 32 are correspondingly arranged along the second direction Y

In this embodiment, the projection of the first electrode terminal 31 along the second direction Y at least partially overlaps with the projection of the second electrode terminal 32 along the second direction Y. The projection of the first electrode terminal 31 and the projection of the second electrode terminal 32 are projections in the same plane perpendicular to the second direction Y

In this embodiment, the first electrode terminal 31 and the second electrode terminal 32 are correspondingly arranged along the second direction Y Therefore, the first electrode terminal 31 and the second electrode terminal 32 can share the same space in the third direction Z, thereby effectively improving the space utilization rate and increasing the energy density of the battery cell 6.

This embodiment may also reduce the dislocation of the first electrode terminal 31 and the second electrode terminal 32 in the third direction Z. Therefore, under a condition that a plurality of battery cells 6 are connected in series, the scheme facilitates the connection of the first electrode terminal 31 and the second electrode terminal 32 of the adjacent battery cells 6.

In some embodiments, two ends of the recess 24 along the second direction Y extend to the two second surfaces 22 respectively.

In this embodiment, the busbar 7 may extend into the recess 24 from a side of the recess close to the second surface 22, so as to connect to the first electrode terminal 31 or the second electrode terminal 32.

In some embodiments, a plurality of battery cells 6 of the battery are arranged along the first direction X, and adjacent battery cells 6 are electrically connected by the busbar 7.

In this embodiment, the first surfaces 21 of the adjacent battery cells 6 are opposite to each other, and the first surface 21 is a surface having the largest area among all surfaces of the housing 20, so that the overall size of the plurality of the battery cells 6 can be more uniform in each directions.

In some embodiments, in two adjacent battery cells 6, the first electrode terminal 31 of one battery cell 6 and the second electrode terminal 32 of the other battery cell 6 are correspondingly arranged along the first direction X. The busbar 7 is bent in a U-shaped structure including a first confluence part 7a, a second confluence part 7b and a third confluence part 7c. The first confluence part 7a is configured to extend into the recess 24 of one battery cell 6 and connect to the first electrode terminal 31. The second confluence part 7b is configured to extend into the recess 24 of the other battery cell 6 and connect to the second electrode terminal 32. The third confluence part 7c is configured to connect the first confluence part 7a and the second confluence part 7b, and is located on a side of the other battery cell 6 along the second direction Y

In a plurality of battery cells 6 arranged in sequence, the battery cell 6 rotates 180° relative to the adjacent battery cell 6 along an axis parallel to the first direction X. Therefore, the first electrode terminal 31 of the battery cell 6 and the second electrode terminal 32 of the adjacent battery cell 6 are correspondingly arranged along the first direction X.

In this embodiment, the busbar 7 does not occupy additional space on the first direction X.

In other embodiments, in two adjacent battery cells 6, the first electrode terminals 31 of the two battery cells 6 are correspondingly arranged along the first direction X. The busbar 7 connects the first electrode terminals 31 of the two battery cells 6 to connect the two battery cells 6 in parallel.

Fig. 6 is a schematic stereoscopic view of a battery cell according to some other embodiments of the present application.

As shown in Fig. 6, in some embodiments, one end of the recess 24 along the third direction Z extends to one of the third surfaces 23.

The recess 24 is disposed at the end of the housing 20 along the third direction Z.

In this embodiment, the busbar may extend into the recess 24 from a side of the recess 24 close to the third surface 23, so as to connect to the first electrode terminal 31 or the second electrode terminal 32.

In some embodiments, two ends of the recess 24 along the second direction Y extend to the two second surfaces 22 respectively. At this time, the busbar may extend into the recess 24 from a side of the recess 24 close to the third surface 23, or may extend into the recess 24 from a side of the recess 24 close to the second surface 22, which simplifies the assembly process of the busbar.

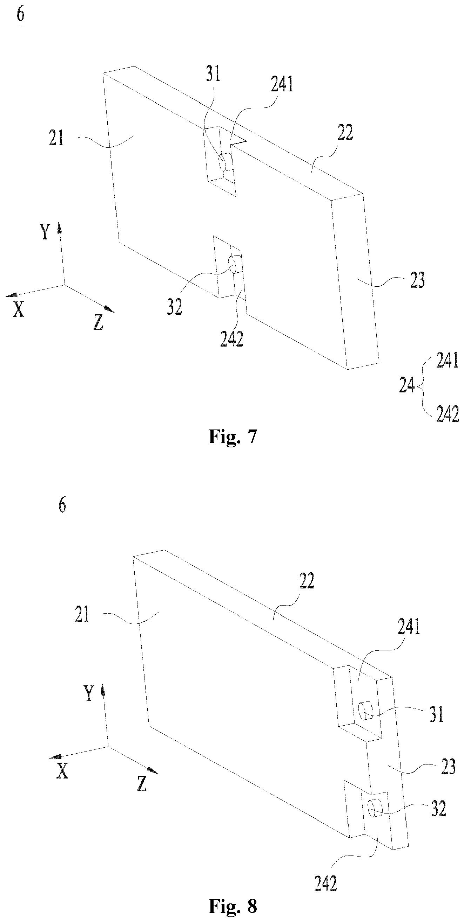

Fig. 7 is a schematic stereoscopic view of a battery cell according to some other embodiments of the present application

As shown in Fig. 7, in some embodiments, the recess 24 includes a first recess 241 and a second recess 242 that are spaced apart, at least a part of the first electrode terminal 31 is accommodated within the first recess 241, and at least a part of the second electrode terminal 32 is accommodated within the second recess 242.

In some embodiments, a part of the first electrode terminal 31 located outside the housing 20 is completely accommodated within the first recess 241, and a part of the second electrode terminal 32 located outside the housing 20 is completely accommodated within the second recess 242.

In some embodiments, the first recess 241 and the second recess 242 are correspondingly arranged along the second direction Y.

In this embodiment, the projection of the first recess 241 along the second direction Y at least partially overlaps with the projection of the second recess 242 along the second direction Y The projection of the first recess 241 and the projection of the second recess 242 are projections in the same plane perpendicular to the second direction Y

In this embodiment, the first recess 241 and the second recess 242 share the same space in the third direction Z, so that more space can be reserved for the electrode component 10 in the third direction Z, thereby effectively increasing the capacity of the electrode component 10.

In some embodiments, one end of the first recess 241 away from the second recess 242 extends to one of the second surfaces 22, and one end of the second recess 242 away from the first recess 241 extends to the other of the second surfaces 22.

In this embodiment, one busbar 7 may extend into the first recess 241 from a side of the first recess 241 close to one of the second surfaces 22, so as to connect to the first electrode terminal 31. Another busbar 7 may extend into the second recess 242 from a side of the second recess 242 close to the other of the second surfaces 22, so as to connect to the second electrode terminal 32.

Fig. 8 is a schematic stereoscopic view of a battery cell according to some other embodiments of the present application.

As shown in Fig. 8, in some embodiments, one end of the first recess 241 along the third direction Z and one end of the second recess 242 along the third direction Z extend to a same third surface 23 of the third surfaces 23.

The first recess 241 and the second recess 242 are disposed at the same end of the housing 20 along the third direction Z.

In this embodiment, two busbars 7 may extend into the first recess 241 and the second recess 242 from a side of the first recess 241 close to the third surface 23 and a side of the second recess 242 close to the third surface 23 respectively, so as to connect to the first electrode terminal 31 and the second electrode terminal 32 respectively.

In some embodiments, one end of the first recess 241 away from the second recess 242 extends to one of the second surfaces 22, and one end of the second recess 242 away from the first recess 241 extends to the other of the second surfaces 22.

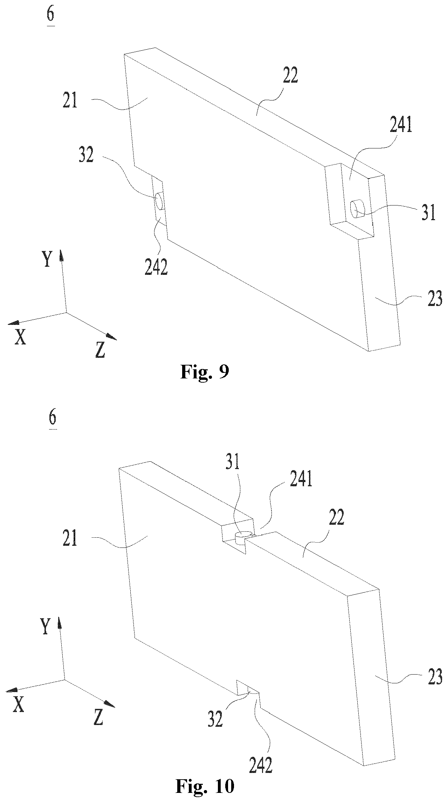

Fig. 9 is a schematic stereoscopic view of a battery cell according to some other embodiments of the present application.

As shown in Fig. 9, in some embodiments, a projection of the first recess 241 along the first direction X and a projection of the first recess 241 along the first direction X are arranged along a diagonal direction of a projection of the housing 20 along the first direction X.

In the above description, the projection of the first recess 241, the projection of the second recess 242, and the projection of the housing 20 are projections in the same plane perpendicular to the first direction X.

In some embodiments, the housing 20 is symmetrical by rotating 180° along an axis parallel to the first direction X.

In some embodiments, one end of the first recess 241 along the second direction Y extends to one of the second surfaces 22, and one end of the second recess 242 along the second direction Y extends to the other of second surfaces 22.

In this embodiment, one busbar 7 may extend into the first recess 241 from a side of the first recess 241 close to one of the second surfaces 22, so as to connect to the first electrode terminal 31. Another busbar 7 may extend into the second recess 242 from a side of the second recess 242 close to the other of the second surfaces 22, so as to connect to the second electrode terminal 32.

In some embodiments, one end of the first recess 241 along the third direction Z extends to one of the third surfaces 23, and one end of the second recess 242 along the third direction Z extends to the other of third surfaces 23.

In this embodiment, one busbar 7 may extend into the first recess 241 from a side of the first recess 241 close to one of the third surfaces 23, so as to connect to the first electrode terminal 31. Another busbar 7 may extend into the second recess 242 from a side of the second recess 242 close to the other of the third surfaces 23, so as to connect to the second electrode terminal 32.

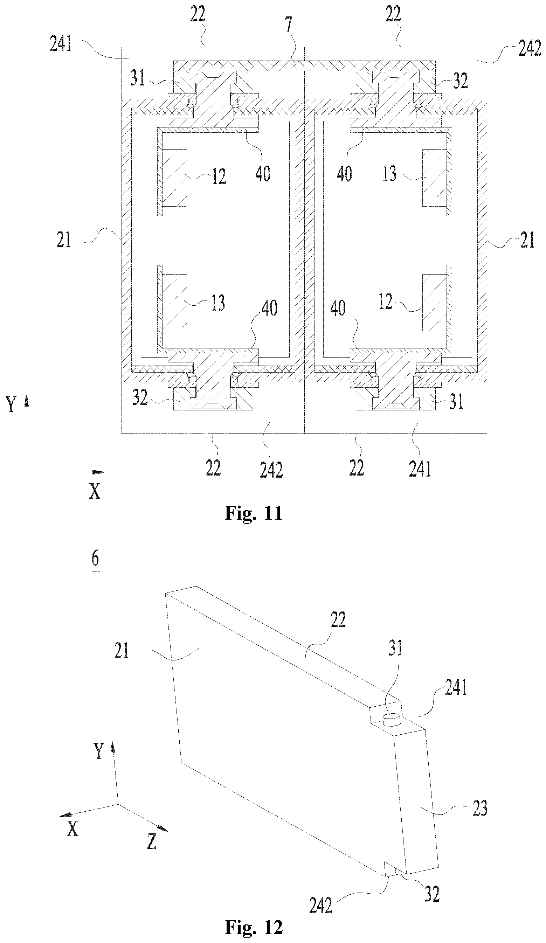

Fig. 10 is a schematic stereoscopic view of a battery cell according to some other embodiments of the present application; Fig. 11 is a schematic cross-sectional view of the battery cell shown in Fig. 10 and a busbar connected to the battery cell.

As shown in Fig. 10 and Fig. 11, in some embodiments, the recess includes a first recess 241 and a second recess 242, the first recess 241 is recessed relative to one of the second surfaces 22, and the second recess 242 is recessed relative to the other of the second surfaces 22. The electrode terminal 30 includes a first electrode terminal 31 and a second electrode terminal 32 having opposite polarities, at least a part of the first electrode terminal 31 is accommodated within the first recess 241, and at least a part of the second electrode terminal 32 is accommodated within the second recess 242.

In some examples, two ends of the first recess 241 along the first direction X extend to the two first surfaces 21 respectively, and two ends of the second recess 242 along the first direction X extend to the two first surfaces 21 respectively.

In this embodiment, one busbar 7 may extend into the first recess 241 from a side of the first recess 241 close to one of the first surfaces 21, so as to connect to the first electrode terminal 31. Another busbar 7 may extend into the second recess 242 from a side of the second recess 242 close to the other of the first surfaces 21, so as to connect to the second electrode terminal 32.

Under a condition that a plurality of battery cells 6 are arranged along the first direction X, the first recesses 241 of the plurality of battery cells 6 are opposite along the first direction X. The busbar 7 may simultaneously extend into the first recesses 241 of the plurality of battery cells 6 along the first direction X, and connect the first electrode terminals 31 of the plurality of battery cells 6 to achieve a parallel connection of the plurality of battery cells 6.

This embodiment can simplify the structure of the busbar 7 and reduce the assembly difficulty of the busbar 7. The busbar 7 is integrally accommodated in a space formed by the first recesses 241 of the plurality of battery cells 6, thereby improving the space utilization rate and increasing the energy density of the battery.

Exemplary, the busbar 7 is a flat plate structure parallel to the first direction X.

In some embodiments, the first recess 241 and the second recess 242 are correspondingly arranged along the second direction Y.

In this embodiment, the first recess 241 and the second recess 242 share the same space in the third direction Z, so that more space can be reserved for the electrode component 10 in the third direction Z, thereby effectively increasing the capacity of the electrode component 10.

In the plurality of battery cells 6 arranged along the first direction X in sequence, the battery cell 6 is rotated 180° relative to the adjacent battery cell 6 along an axis parallel to the first direction X. Therefore, the first recess 241 of the battery cell 6 and the second recess 242 of the adjacent battery cell 6 are correspondingly arranged along the first direction X.

The busbar 7 can simultaneously extend into the first recess 241 of one battery cell 6 and the second recess 242 of another battery cell 6 along the first direction X, and connect the first electrode terminal 31 and the second electrode terminal 32 to connect the two battery cells 6 in series. At this time, the busbar 7 is integrally accommodated in the space formed by the first recess 241 and the second recess 242, thereby improving the space utilization rate and increasing the energy density of the battery.

In some embodiments, the busbar 7 is integrally accommodated in the space formed by the recesses of the plurality of battery cells 6, thereby improving the space utilization rate and increasing the energy density of the battery.

In some embodiments, the first electrode tab 12 is electrically connected to the first electrode terminal 31 by one transfer component 40, and the second electrode tab 13 is electrically connected to the second electrode terminal 32 by another transfer component 40.

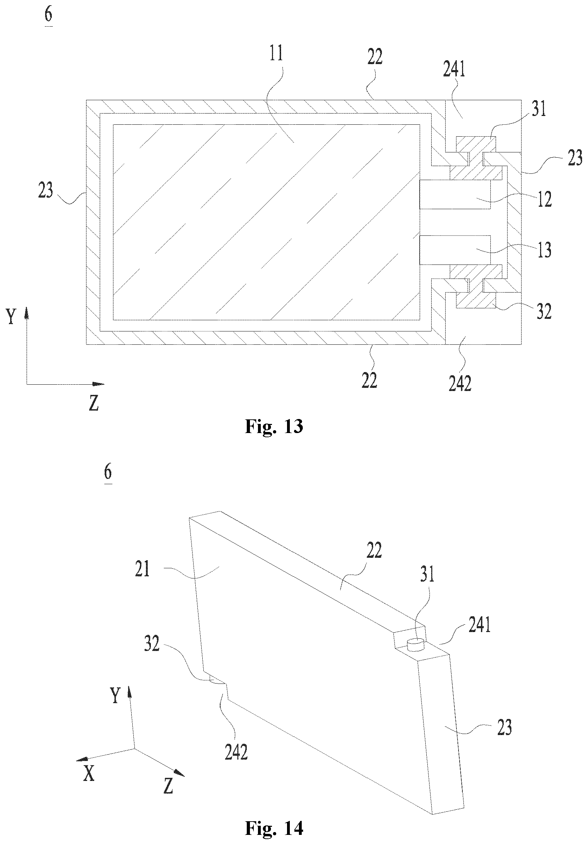

Fig. 12 is a schematic stereoscopic view of a battery cell according to some other embodiments of the present application; Fig. 13 is a schematic cross-sectional view of the battery cell shown in Fig. 12.

As shown in Fig. 12 and Fig. 13, one end of the first recess 241 along the third direction Z and one end of the second recess 242 along the third direction Z extend to a same third surface 23 of the third surfaces 23.

In this embodiment, the first recess 241 and the second recess 242 are located at the same end of the housing 20 along the third direction Z.

In this embodiment, two busbars 7 may extend into the first recess 241 and the second recess 242 from a side of the first recess 241 close to the third surface 23 and a side of the second recess 242 close to the third surface 23 respectively, so as to connect to the first electrode terminal 31 and the second electrode terminal 32 respectively.

In some embodiments, two ends of the first recess 241 along the first direction X extend to the two first surfaces 21 respectively, and two ends of the second recess 242 along the first direction X extend to the two first surfaces 21 respectively.

In some embodiments, the electrode component includes a body portion 11, a first electrode tab 12 and a second electrode tab 13, and the first electrode tab 12 and the second electrode tab 13 are led out from the body portion 11 and have opposite polarities. In the second direction Y, at least a part of the first electrode tab 12 is located between the first electrode terminal 31 and the second electrode terminal 32 and is electrically connected to the first electrode terminal 31, and at least a part of the second electrode tab 13 is located between the first electrode terminal 31 and the second electrode terminal 32 and is electrically connected to the second electrode terminal 32.

The first electrode tab 12 and the second electrode tab 13 are spaced apart along the second direction Y.

In this embodiment, the first electrode tab 12 and the second electrode tab 13 are arranged using the space between the first electrode terminal 31 and the second electrode terminal 32, so that more space can be reserved for the body portion 11, and the capacity of the electrode component 10 is increased.

Fig. 14 is a schematic stereoscopic view of a battery cell according to some other embodiments of the present application.

As shown in Fig. 14, in some embodiments, the first recess 241 and the second recess 242 are diagonally arranged on the housing 20.

In some embodiments, the housing 20 is symmetrical by rotating 180° along an axis parallel to the first direction X.

In some embodiments, one end of the first recess 241 along the third direction Z extends to one of the third surfaces 23, and one end of the second recess 242 along the third direction Z extends to the other of third surfaces 23.

In this embodiment, one busbar 7 may extend into the first recess 241 from a side of the first recess 241 close to one of the third surfaces 23, so as to connect to the first electrode terminal 31. Another busbar 7 may extend into the second recess 242 from a side of the second recess 242 close to the other of the third surfaces 23, so as to connect to the second electrode terminal 32.

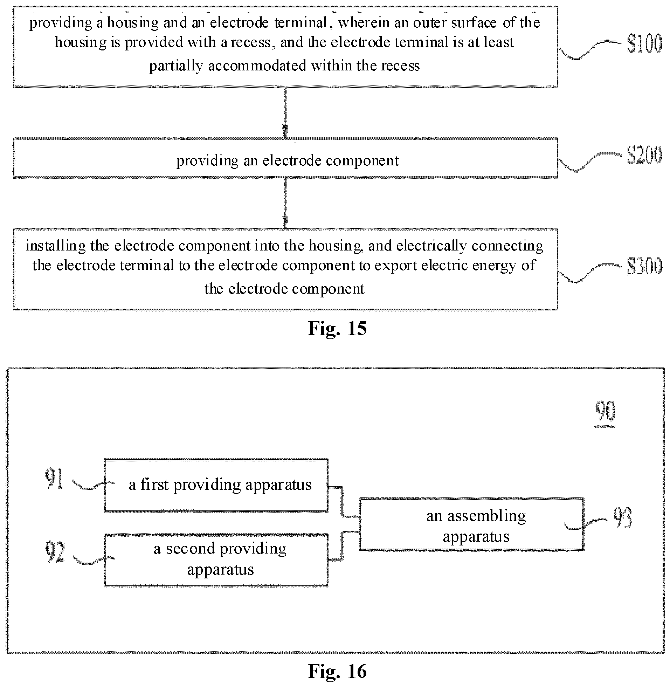

Fig. 15 is a schematic flowchart of a method for manufacturing a battery cell according to some embodiments of the present application.

As shown in Fig. 15, the method for manufacturing the battery cell according to the embodiments of the present application includes:
S100: providing a housing and an electrode terminal, wherein an outer surface of the housing is provided with a recess, and the electrode terminal is at least partially accommodated within the recess;
S200: providing an electrode component;
S300: installing the electrode component into the housing, and electrically connecting the electrode terminal to the electrode component to export electric energy of the electrode component;
wherein the recess is configured to accommodate at least a part of a busbar of a battery, the busbar is configured to connect electrode terminals of a plurality of battery cells to electrically connect the plurality of battery cells.

It should be noted that, for the structure of the battery cell manufactured by the above method, reference may be made to the battery cell provided in the above embodiments.

Under a condition that the battery cell is manufactured according to the above method, it is not necessary to carry out the steps in the above order, that is, the steps may be carried out in an order mentioned in the embodiments, or in an order different from that mentioned in the embodiments, or several steps may be performed simultaneously. For example, the execution of steps S100 and S200 is in no particular order, and may also be performed simultaneously.

Fig. 16 is a schematic flowchart of a method for manufacturing a battery cell according to some embodiments of the present application.

As shown in Fig. 16, a system 90 for manufacturing a battery cell according to the embodiments of the present application includes:
a first providing apparatus 91 configured to provide a housing and an electrode terminal, wherein an outer surface of the housing is provided with a recess, and the electrode terminal is at least partially accommodated within the recess;
a second providing apparatus 92 configured to provide an electrode component;
an assembling apparatus 93 configured to install the electrode component into the housing, and electrically connect the electrode terminal to the electrode component to export electric energy of the electrode component;
wherein the recess is configured to accommodate at least a part of a busbar of a battery, the busbar is configured to connect electrode terminals of a plurality of battery cells to electrically connect the plurality of battery cells.

For a related structure of a battery cell manufactured by the above-mentioned system for manufacturing a battery cell, reference may be made to the battery cell provided in the above-mentioned embodiments.

It should be noted that the embodiments in the present application and the features of the embodiments may be combined with each other in the case of no conflict.

Finally, it should be noted that: the above embodiments are only for illustrating technical solutions of the present application, rather than for limiting; although the present application has been described in detail with reference to the foregoing embodiments, those of ordinary skill in the art should understand: it is still possible to modify the technical solutions recited in the foregoing embodiments, or perform equivalent replacements to some of the technical features thereof, however, these modifications or replacements do not make an essence of the corresponding technical solutions deviate from the scope of the technical solutions of the embodiments of the present application.

## Claims

1. A battery cell, comprising:
a housing, wherein an outer surface of the housing is provided with a recess;
an electrode component accommodated within the housing; and
an electrode terminal at least partially accommodated within the recess, wherein the electrode terminal is configured to be electrically connected to the electrode component to export electric energy of the electrode component;
wherein the recess is configured to accommodate at least a part of a busbar of a battery, the busbar is configured to connect electrode terminals of a plurality of battery cells to electrically connect the plurality of battery cells.

2. The battery cell according to claim 1, wherein a part of the electrode terminal positioned outside the housing is completely accommodated within the recess.

3. The battery cell according to claim 1 or 2, wherein the housing comprises two first surfaces oppositely arranged along a first direction, two second surfaces oppositely arranged along a second direction, and two third surfaces oppositely arranged along a third direction.

4. The battery cell according to claim 3, wherein an area of the first surface is greater than an area of the second surface, and the area of the first surface is greater than an area of the third surface.

5. The battery cell according to claim 3 or 4, wherein the first direction, the second direction and the third direction are perpendicular to each other.

6. The battery cell according to any of claims 3 to 5, wherein the recess is recessed relative to the first surface;
the electrode terminal comprises a first electrode terminal and a second electrode terminal having opposite polarities, wherein at least a part of the first electrode terminal and at least a part of the second electrode terminal are accommodated within the recess.

7. The battery cell according to claim 6, wherein the first electrode terminal and the second electrode terminal are correspondingly arranged along the second direction.

8. The battery cell according to claim 7, wherein two ends of the recess along the second direction extend to the two second surfaces respectively; and/or
one end of the recess along the third direction extends to one of the third surfaces.

9. The battery cell according to claim 6, wherein the recess comprises a first recess and a second recess that are spaced apart, at least a part of the first electrode terminal is accommodated within the first recess, and at least a part of the second electrode terminal is accommodated within the second recess.

10. The battery cell according to claim 9, wherein the first recess and the second recess are correspondingly arranged along the second direction.

11. The battery cell according to claim 10, wherein
one end of the first recess away from the second recess extends to one of the second surfaces, and one end of the second recess away from the first recess extends to the other of the second surfaces; and/or
one end of the first recess along the third direction and one end of the second recess along the third direction extend to a same third surface of the third surfaces.

12. The battery cell according to claim 9, wherein
a projection of the first recess along the first direction and a projection of the first recess along the first direction are arranged along a diagonal direction of a projection of the housing along the first direction.

13. The battery cell according to claim 12, wherein
one end of the first recess along the second direction extends to one of the second surfaces, and one end of the second recess along the second direction extends to the other of second surfaces; and/or
one end of the first recess along the third direction extends to one of the third surfaces, and one end of the second recess along the third direction extends to the other of the third surfaces.

14. The battery cell according to any of claims 3 to 5, wherein the recess comprises a first recess and a second recess, the first recess is recessed relative to one of the second surfaces, and the second recess is recessed relative to the other of the second surfaces;
the electrode terminal comprises a first electrode terminal and a second electrode terminal having opposite polarities, wherein at least a part of the first electrode terminal is accommodated within the first recess, and at least a part of the second electrode terminal is accommodated within the second recess.

15. The battery cell according to claim 14, wherein two ends of the first recess along the first direction extend to the two first surfaces respectively, and two ends of the second recess along the first direction extend to the two first surfaces respectively.

16. The battery cell according to claim 14 or 15, wherein the first recess and the second recess are correspondingly arranged along the second direction.

17. The battery cell according to claim 16, wherein one end of the first recess along the third direction and one end of the second recess along the third direction extend to a same third surface of the third surfaces.

18. The battery cell according to claim 16 or 17, wherein the electrode component comprises a body portion, a first electrode tab and a second electrode tab, and the first electrode tab and the second electrode tab are led out from the body portion and have opposite polarities;
in the second direction, at least a part of the first electrode tab is located between the first electrode terminal and the second electrode terminal and is electrically connected to the first electrode terminal, and at least a part of the second electrode tab is located between the first electrode terminal and the second electrode terminal and is electrically connected to the second electrode terminal.

19. The battery cell according to claim 14 or 15, wherein the first recess and the second recess are diagonally arranged on the housing.

20. The battery cell according to claim 19, wherein one end of the first recess along the third direction extends to one of the third surfaces, and one end of the second recess along the third direction extends to the other of the third surfaces.

21. A battery, comprising:
a plurality of battery cells according to any of claims 1 to 20;
a busbar configured to connect electrode terminals of the plurality of battery cells to electrically connect the plurality of battery cells, wherein the recess of the battery cell is configured to accommodate at least a part of the busbar.

22. The battery according to claim 21, wherein the busbar is integrally accommodated in a space formed by the recesses of the plurality of the battery cells.

23. An electrical apparatus comprising the battery cell according to any of claims 1 to 20, wherein the battery cell is configured to provide electric energy.

24. A method for manufacturing a battery cell, comprising:
providing a housing and an electrode terminal, wherein an outer surface of the housing is provided with a recess, and the electrode terminal is at least partially accommodated within the recess;
providing an electrode component;
installing the electrode component into the housing, and electrically connecting the electrode terminal to the electrode component to export electric energy of the electrode component;
wherein the recess is configured to accommodate at least a part of a busbar of a battery, the busbar is configured to connect electrode terminals of a plurality of battery cells to electrically connect the plurality of battery cells.

25. A system for manufacturing a battery cell, comprising:
a first providing apparatus configured to provide a housing and an electrode terminal, wherein an outer surface of the housing is provided with a recess, and the electrode terminal is at least partially accommodated within the recess;
a second providing apparatus configured to provide an electrode component;
an assembling apparatus configured to install the electrode component into the housing, and electrically connect the electrode terminal to the electrode component to export electric energy of the electrode component;
wherein the recess is configured to accommodate at least a part of a busbar of a battery, the busbar is configured to connect electrode terminals of a plurality of battery cells to electrically connect the plurality of battery cells.
